# EUROPÄISCHE PATENTSCHRIFT

(11) **EP 0 396 640 B1**
(45) Veröffentlichungstag und Bekanntmachung des Hinweises auf die Patenterteilung: **22.02.1995**
(21) Anmeldenummer: 89907700.2
(22) Anmeldetag: 29.06.1989
(51) Int. Cl.: B60T 8/40, B60T 8/88, B60T 17/22, F04B 49/10

(54) **HYDRAULISCHE BREMSANLAGEN MIT BLOCKIERSCHUTZ- ODER ANTRIEBSSCHUPFREGELUNG**
HYDRAULIC BRAKING DEVICES WITH ANTILOCK OR TRACTION CONTROL DEVICE
DISPOSITIFS DE FREINS HYDRAULIQUES AVEC DISPOSITIF ANTIBLOCKAGE OU ANTIPATINAGE

(30) Priorität: 26.08.1988 DE 3828933; 26.08.1988 DE 3828932; 26.08.1988 DE 3828931
(43) Veröffentlichungstag der Anmeldung: 14.11.1990
(60) Teilanmeldung: 92102184.6
(73) Patentinhaber: ITT Automotive Europe GmbH, 60488 Frankfurt (DE)
(72) Erfinder: BURGDORF, Jochen, D-6050 Offenbach-Rumpenheim (DE); VOLZ, Peter, D-6100 Darmstadt (DE)
(86) Internationale Anmeldenummer: EP8900750
(87) Internationale Veröffentlichungsnummer: WO9002066

(56) Entgegenhaltungen:
- EP-A- 0 136 689
- EP-A- 0 183 295
- EP-A- 0 188 685
- EP-A- 0 227 138
- EP-A- 0 242 936
- EP-A- 0 264 148
- EP-A- 0 265 623
- EP-A- 0 284 718
- EP-A- 0 317 705
- DE-A- 2 723 847
- DE-A- 2 916 490
- DE-A- 3 512 110
- GB-A- 2 127 505
- GB-A- 2 193 771
- US-A- 3 969 001
- US-A- 4 290 045
- US-A- 4 610 484
- Patent Abstracts of Japan, Band 9, Nr. 316 (M-438)(2039),12. Dezember 1985, & JP, A, 60150491
- Patent Abstacts of Japan, Band 9, Nr. 92 (M-373), 20. April 1985, &JP, A, 59218396
- Patent Abstacts of Japan, Band 6, Nr. 46 (P-107)(924), 24. März 1982, & JP, A, 56162033
- Patent Abstracts of Japan, Band 10, Nr. 371 (P-526)(2428), 11. Dezember 1986, & JP, A, 61164138
- Patent Abstracts of Japan, Band 9, Nr.231 (M-414)(1954), 18. September 1985, & JP, A, 6088883

## Beschreibung

Die Erfindung bezieht sich auf hydraulische Bremsanlagen mit Blockierschutz- oder Antriebsschlupfregelung, mit einer elektromotorisch angetriebenen Hydraulikpumpe, mit einem elektronischen Regler und mit einer elektronischen Überwachungseinheit.

Derartige Bremsanlagen sind bereits in vielfältiger Ausführung bekannt. Die Überwachungseinheiten sind auf das Erkennen von Fehlerquellen unterschiedlicher Art gerichtet.

In der DE-A1 29 16 490 ist eine Vorrichtung zum Überwachen des Betriebsverhaltens der Ventile eines Kolbenkompressors, insbesondere eines Höchstdruckkompressors, offenbart. Hierzu wird vorgeschlagen, am oder im Zylinderkopf jedes Zylinders des Kolbenkompressors ein oder mehrere Schwingungsaufnehmer und im Bereich des Kurbeltriebs des Kolbenkompressors einen Phasengeber anzuordnen. Des weiteren sind Einrichtungen vorhanden, die auf die von dem Schwingungsaufnehmer und dem Phasengeber abgegebenen Signale ansprechen. Es ist einleuchtend, daß bei einem solchen Gerät die Ventile starke Schwingungen hervorrufen, die zur Überwachung des Gerätes ausgewertet werden können. Dieser Ventil-Bewegungsablauf gibt die Hauptfunktion des Gerätes wieder und muß daher überwacht werden. Der erforderliche hohe Überwachungsaufwand spielt bei Geräten dieser Art nur eine untergeordnete Rolle.

Aus der DE-A1-27 23 847 ist eine Überwachungseinrichtung für eine blockiergeschützte Bremsanlage bekannt. Die Überwachung beruht auf der Messung des Differenzdruckes in der Eingangs- und Ausgangsleitung einer Regelventileinrichtung. Es ist fraglich, ob auf diese Weise tatsächlich relevante Fehler rechtzeitig festgestellt werden können.

Ferner ist in der deutschen Patentanmeldung DE-A1-37 31 603 eine Bremsanlage mit einem Hauptzylinder, mit Radzylindern und mit einer Vorrichtung zur Antiblockierregelung beschrieben. Bei dieser Bremsanlage ist zur Positionierung des Hauptzylinderkolbens im Regelmodus eine Pumpe vorgesehen, deren Fördervolumen variiert werden kann, die durch eine hydraulische Leitung mit dem Hauptzylinder verbunden ist und die durch ihr Fördervolumen den Kolben positioniert.

Schließlich ist dem Auszug "Patent Abstracts of Japan, Band 9, Nr. 316" als bekannt zu entnehmen, die Kennzahlen einer Pumpe in einem Computer zu speichern und die Ist-Werte mit den Soll-Werten zu vergleichen. Eine Anwendung dieses Prinzips zur Überwachung eines Antiblockiersystems ist weder vorgesehen, noch ohne weiteres möglich.

Der vorliegenden Erfindung liegt nun die Aufgabe zugrunde, eine Bremsanlage mit Blockierschutz- oder Antriebsschlupfregelung zu entwicklen, die das Auftreten eines Fehlers, insbesondere das Versagen des Motor-Pumpen-Aggregates, sehr schnell und zuverlässig erkennen läßt. Der für diese Überwachung erforderliche Aufwand sollte vergleichsweise gering sein.

Es hat sich gezeigt, daß diese Aufgabe mit den in den Ansprüchen beschriebenen hydraulischen Bremsanlagen gelöst werden kann. Das Besondere der Erfindung besteht also darin, daß die Hydraulikpumpe oder der Antriebsmotor der Pumpe mit einem Körperschallsensor ausgerüstet ist, dessen Ausgang direkt oder über eine Elektronik, die zur Aufbereitung der Sensorsignale dient, mit der Überwachungseinheit verbunden ist, daß das von dem Sensor während des Betriebs der Pumpe aufgenommene Körperschallspektrum mit einem in der Überwachungseinheit gespeicherten Soll-Bild verglichen wird und daß bei Abweichungen des Ist-Bildes von dem Soll-Bild ein Störsignal ausgelöst wird.

Bei einer anderen Bremsanlage nach der Erfindung wird anstelle eines Körperschallsensors ein Beschleunigungssensor verwendet, und es werden die während des Betriebs der Pumpe aufgenommenen Beschleunigungssignale mit einem gespeicherten Soll-Bild der Beschleunigung verglichen.

Bei einer weiteren, im Anspruch 4 beschriebenen Bremsanlage nach der Erfindung ist die Pumpe oder der Elektromotor mit einem Lagerkraftsensor ausgerüstet, wobei das während des Betriebs der Pumpe aufgenommene Ist-Bild der Lagerkraft mit einem gespeicherten Soll-Bild der Lagerkraft verglichen wird.

Durch die erfindungsgemäß vorgeschlagenen Ausbildungen der hydraulischen Bremsanlagen wird das Auftreten von Fehlfunktionen, insbesondere des Motor-Pumpenaggregats durch Änderungen des Körperschallspektrums, des Beschleunigungsbildes oder des Lagerkraft-Bildes - je nach Ausführungsart der Bremsanlage - direkt und dadurch sehr schnell erkannt. Mit Hilfe des Störsignals wird dann in bekannter Weise die Regelung abgeschaltet, um wenigstens die Bremsenfunktion, wenn auch ohne Regelung, sicherzustellen.

Weitere Merkmale, Vorteile und Anwendungsmöglichkeiten der Erfindung gehen aus der folgenden Darstellung von Ausführungsbeispielen anhand der beigefügten Abbildungen hervor.

Es zeigen in schematischer Darstellung
- Fig. 1: den hydraulischen Schaltplan eines Antiblockiersystems für Kraftfahrzeuge,
- Fig. 2: Teile einer Pumpe für ein Antiblockiersystem nach Fig. 1, und
- Fig. 3: Teile eines Aggregats, bestehend aus einem elektromotorischen Antrieb und einer Pumpe.

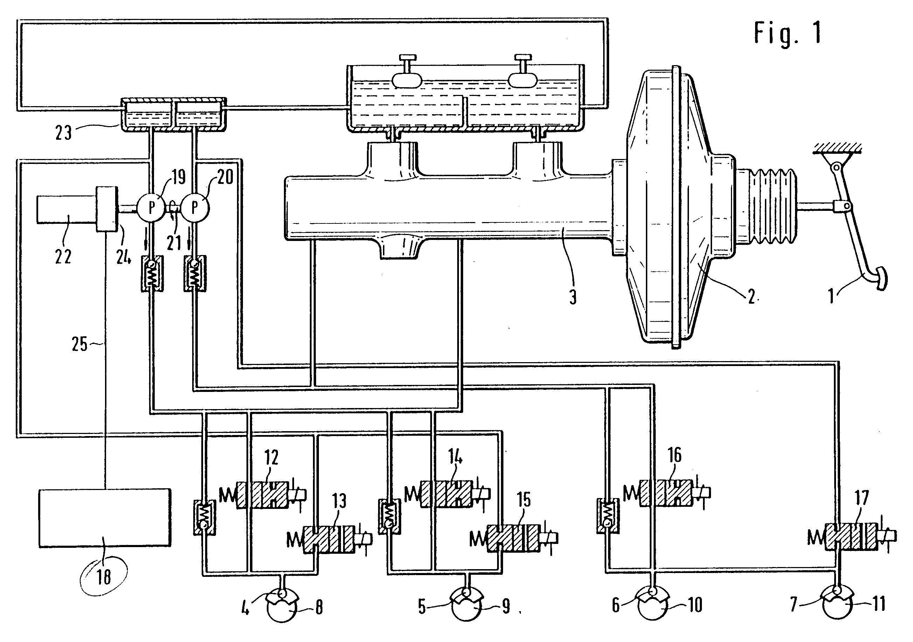

Das Ausführungsbeispiel nach Fig. 1 geht von einer bekannten Antiblockiervorrichtung aus. Es ist ein Bremspedal 1 wiedergegeben, das auf einen Vakuumbremskraftverstärker 2 einwirkt. Mit der durch den Verstärker erhöhten Fußkraft werden die Kolben des Tandemhauptzylinders 3 bewegt. In den zu den Kolben des Tandemhauptzylinders gehörenden Druckräumen wird Druck aufgebaut. Mit diesem Druck werden im Normalbremsmodus die Radzylinder 4,5,6,7 der Scheibenbremsen 8,9,10,11 mit Druckmittel beaufschlagt.

Die elektromagnetisch betätigbaren Ventile 12,13,14,15,16,17 bilden in ihrer Gesamtheit einen Druckmodulator. Die Ventile werden aufgrund eines Regelalgorithmus, der im elektronischen Regler 18 gespeichert ist, geschaltet.

Mit 19,20 sind zwei Pumpen bezeichnet, die über eine Welle 21 von einem Elektromotor 22 angetrieben werden. Mit 23 ist der Druckmittelvorratsbehälter für die Pumpen bezeichnet. Im Antiblockierregelfall (Regelmodus) fördern die Pumpen Druckmittel einerseits in die Druckräume des Tandemhauptzylinders und andererseits zum Druckmodulator.

Die Elektromagnetventile des Druckmodulators werden aufgrund des im elektronischen Regler gespeicherten Regelalgorithmus geschaltet. Einzelheiten hierzu sind dem eingangs zitierten Stand der Technik zu entnehmen.

Durch die Betätigung der Elektromagnetventile nach Maßgabe des Regelalgorithmus werden in den Radzylindern 4,5,6,7 die für die Antiblockierregelung notwendigen Phasen: Druckabsenkung, Druckkonstanthaltung, Wiederanstieg des Drucks in ihrer Länge und in ihrer Reihenfolge erzeugt.

Der elektrische Antriebsmotor 22 in Fig. 1 ist mit einem Sensor 24 versehen, der den Körperschall des Motors, wenn dieser in Betrieb ist, aufnimmt. Der Sensor kann mit einer Elektronik zur Aufbereitung der Sensorsignale, die im Motor integriert ist, versehen sein. Die Signale werden über die Signalleitung 25 an den elektronischen Regler 18 weitergeleitet.

Das Körperschallspektrum, das während des Betriebs des Elektromotors sensiert wird, wird im elektronischen Regler als Ist-Bild mit einem im elektronischen Regler gespeicherten Soll-Bild verglichen. Bei Abweichungen des Ist-Bilds vom Soll-Bild wird durch den elektronischen Regler ein Störsignal ausgelöst.

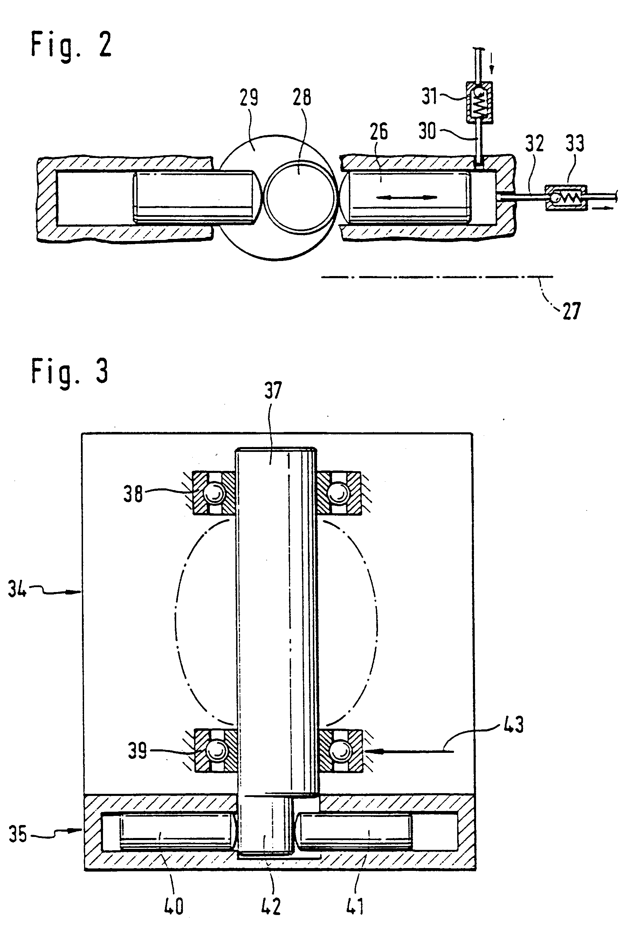

In einem weiteren Ausführungsbeispiel, siehe Fig. 2, wird die Beschleunigung des Kolbens der Pumpe sensiert. In Fig. 2 ist dieser Kolben mit 26 bezeichnet. Die Lage der sensitiven Achse des Sensors trägt die Bezugsziffer 27.

Die Kolben der Pumpe nach Fig. 2 werden durch einen rotierenden Exzenter 28 in translatorische Bewegungen versetzt. Der Exzenter sitzt auf der Welle 29. In Fig. 2 rechts sind schematisch die Saugleitung 30 mit dem Rückschlagventil 31 gezeigt, sowie die Druckleitung 32 mit dem Rückschlagventil 33.

In Fig. 3 wird ein weiteres Ausführungsbeispiel der Erfindung dargestellt. Mit 34 ist ein Elektromotor bezeichnet, der die Pumpe 35 antreibt. Der Elektromotor weist die Welle 37 auf. Die Welle läuft in den Lagern 38,39. Zwei Kolben 40,41 werden durch den auf der Welle 37 angebrachten rotierenden Exzenter 42 in translatorische Bewegung gebracht.

Das pumpennahe Lager 39 ist in besonderer Weise radial wirkenden Kräften ausgesetzt. Die vom Lager 39 aufzubringenden Lagerkräfte sind durch den Pfeil 43 bezeichnet. Diese Lagerkräfte werden sensiert.

Die Sensorsignale nach den Ausführungsbeispielen der Fig. 2 und Fig. 3 werden in analoger Weise wie in Fig. 1 im Zusammenhang mit dem Körperschallsignal beschrieben, an den elektronischen Regler weitergeleitet und dort verarbeitet.

## Patentansprüche

1. Hydraulische Bremsanlage mit Blockierschutz- oder Antriebsschlupfregelung, mit einer elektromotorisch angetriebenen Hydraulikpumpe (19,20), mit einem elektronischen Regler (18) und mit einer elektronischen Überwachungseinheit, dadurch **gekennzeichnet,** daß die Hydraulikpumpe (19,20) oder der Antriebsmotor (22) der Pumpe (19, 20) mit einem Körperschallsensor (24) ausgerüstet ist, dessen Ausgang direkt oder über eine Elektronik, die zur Aufbereitung der Sensorsignale dient, mit der Überwachungseinheit verbunden ist, daß das von dem Sensor (24) während des Betriebs der Pumpe aufgenommene (19,20) Körperschallspektrum mit einem in der Überwachungseinheit gespeicherten Soll-Bild verglichen wird und daß bei Abweichungen des Ist-Bildes von dem Soll-Bild ein Störsignal ausgelöst wird.

2. Hydraulische Bremsanlage mit Blockierschutz- oder Antriebsschlupfregelung, mit einer elektromotorisch angetriebenen Hydraulikpumpe (19,20), mit einem elektronischen Regler (18) und mit einer elektronischen Überwachungseinheit, dadurch **gekennzeichnet,** daß die Hydraulikpumpe (19,20) oder der Antriebsmotor (22) mit einem Beschleunigungssensor ausgerüstet ist, dessen Ausgang direkt oder über eine Elektronik, die zur Aufbereitung der Sensorsignale dient, mit der Überwachungseinheit verbunden ist, daß die von dem Beschleunigungssensor während des Betriebs der Pumpe (19,20) aufgenommenen Beschleunigungssignale mit einem in der Überwachungseinheit gespeicherten Soll-Bild der Beschleunigung verglichen werden und daß bei Abweichungen des Ist-Bildes von dem Soll-Bild ein Störsignal ausgelöst wird.

3. Bremsanlage nach Anspruch 2, dadurch **gekennzeichnet,** daß die sensitive Achse (27) des Beschleunigungssensors parallel zu einem Kolben (26) der Hydraulikpumpe angeordnet ist.

4. Hydraulische Bremsanlage mit Blockierschutz- oder Antriebsschlupfregelung, mit einer elektromotorisch angetriebenen Hydraulikpumpe (35), mit einem elektronischen Regler (18) und mit einer elektronischen überwachungseinheit, dadurch **gekennzeichnet,** daß die Pumpe (35) oder der Elektromotor (34) mit einem Lagerkraftsensor (43) ausgerüstet ist, dessen Ausgang direkt oder über eine Elektronik, die zur Aufbereitung der Sensorsignale dient, mit der Überwachungseinheit verbunden ist, daß das von dem Sensor während des Betriebs der Pumpe (35) aufgenommene Ist-Bild der Lagerkraft mit einem in der elektronischen Überwachungseinheit gespeicherten Soll-Bild der Lagerkraft verglichen wird und daß bei Abweichung des Ist-Bildes von dem Soll-Bild ein Störsignal ausgelöst wird.

5. Bremsanlage nach Anspruch 4, dadurch **gekennzeichnet,** daß der Lagerkraftsensor (43) in einem Lagerschild angeordnet ist.

6. Bremsanlage nach einem oder mehreren der Ansprüche 1 bis 5 dadurch **gekennzeichnet,** daß der für die Regelung bestimmte elektronische Regler (18) als elektronische Überwachungseinheit ausgebildet ist.

## Claims

1. A hydraulic brake system with anti-lock or traction slip control systems, comprising an electromotively driven hydraulic pump (19, 20), an electronic controller (18) and an electronic monitoring unit,
**characterized** in that the hydraulic pump (19, 20) or the drive motor (22) of the pump (19, 20) is equipped with a solid-borne sound sensor (24), the output of which is connected to the monitoring unit either directly or by way of an electronics serving to condition the sensor signals, in that the solid-borne sound spectrum picked up by the sensor (24) during the operation of the pump (19, 20) is compared with a desired pattern stored in the monitoring unit, and in that a spurious signal is triggered in the event of deviations of the actual pattern from the desired pattern.

2. A hydraulic brake system with anti-lock or traction slip control systems, comprising an electromotively driven hydraulic pump (19, 20), an electronic controller (18) and an electronic monitoring unit,
**characterized** in that the hydraulic pump (19, 20) or the drive motor (22) is provided with an acceleration sensor, the output of which is connected to the monitoring unit either directly or by way of an electronics serving to condition the sensor signals, in that the acceleration signals picked up by the acceleration sensor during the operation of the pump (19, 20) are compared with a desired acceleration pattern stored in the monitoring unit, and in that a spurious signal is triggered in the event of deviations of the actual pattern from the desired pattern.

3. A brake system as claimed in claim 2,
**characterized** in that the sensitive axis (27) of the acceleration sensor is arranged in parallel to a piston (26) of the hydraulic pump.

4. A hydraulic brake system with anti-lock or traction slip control systems, comprising an electromotively driven hydraulic pump (35), an electronic controller (18) and an electronic monitoring unit,
**characterized** in that the pump (35) or the electric motor (34) is equipped with a force sensor (43) in the bearing, the output of which is connected to the monitoring unit either directly or by way of an electronics serving to condition the sensor signals, in that the actual pattern of the bearing force taken by the sensor during the operation of the pump (35) is compared to the desired pattern of the bearing force memorized in the electronic monitoring unit, and in that a spurious signal is triggered in the event of deviations of the actual pattern from the desired pattern.

5. A brake system as claimed in claim 4,
**characterized** in that the force sensor (43) in the bearing is arranged in a bearing plate.

6. A brake system as claimed in any one or a plurality of claims 1 to 5,
**characterized** in that the electronic controller (18) intended for the control is provided as an electronic monitoring unit.

## Revendications

1. Système de frein hydraulique avec dispositif antiblocage ou antipatinage, comportant une pompe hydraulique (19, 20) entraînée par un moteur électrique, un régulateur électronique (18) et une unité de contrôle électronique, caractérisé en ce que la pompe hydraulique (19, 20) ou le moteur d'entraînement (22) de la pompe (19, 20) est équipé(e) d'un capteur de bruit d'impact (24) dont la sortie est raccordée à l'unité de contrôle directement ou via un circuit électronique qui sert à la préparation des signaux de détection, en ce que le spectre de bruit d'impact enregistré par le capteur (24) au cours du fonctionnement de la pompe (19, 20) est comparé à une image théorique mémorisée dans l'unité de contrôle et en ce qu'un signal d'erreur est déclenché dans le cas d'écart entre l'image réelle et l'image théorique.

2. Système de frein hydraulique avec dispositif antiblocage ou antipatinage, comportant une pompe hydraulique (19, 20) entraînée par un moteur électrique, un régulateur électronique (18) et une unité de contrôle électronique, caractérisé en ce que la pompe hydraulique (19,20) ou le moteur d'entraînement (22) est équipé(e) d'un capteur d'accélération dont la sortie est raccordée à l'unité de contrôle directement ou via un circuit électronique qui sert à la préparation des signaux du capteur, en ce les signaux d'accélération enregistrés par le capteur d'accélération au cours du fonctionnement de la pompe (19,20) sont comparés à une image théorique de l'accélération mémorisée dans l'unité de contrôle et en ce que, dans le cas d'écart entre l'image réelle et l'image théorique, un signal d'erreur est déclenché.

3. Système de frein selon la revendication 2, caractérisé en ce que l'arbre sensible (27) du capteur d'accélération est agencé parallèlement à un piston (26) de la pompe hydraulique.

4. Système de frein hydraulique avec dispositif antiblocage ou antipatinage, comportant une pompe hydraulique (35) entraîné par un moteur électrique, un régulateur électronique (18) et une unité de contrôle électronique, caractérisé en ce que la pompe (35) ou le moteur électrique (34) est équipé(e) d'un capteur de force sur les paliers (43) dont la sortie est raccordée à l'unité de contrôle directement ou via un circuit électronique qui sert à la préparation des signaux du capteur, en ce que l'image réelle de la force sur les paliers enregistrée par le capteur au cours du fonctionnement de la pompe (35) est comparée à une image théorique de cette force enregistrée dans l'unité de contrôle électronique et en ce que, dans le cas d'écart entre l'image réelle et l'image théorique, un signal d'erreur est déclenché.

5. Système de frein selon la revendication 4, caractérisé en ce que le capteur de force sur les paliers (43) est agencé dans une flasque des paliers.

6. Système de frein selon une ou plusieurs revendications 1 à 5, caractérisé en ce que le régulateur électronique (18) destiné à la régulation se présente sous la forme d'une unité de contrôle électronique.
